# FASCICULE DE BREVET EUROPEEN

(11) **EP 0 877 047 B1**
(45) Date de publication et mention de la délivrance du brevet: **02.10.2002**
(21) Numéro de dépôt: 98107525.2
(22) Date de dépôt: 24.04.1998
(51) Int. Cl.: C08K 9/02, C08C 19/44, B60C 1/00, C08L 21/00

(54) **Composition de caoutchouc à base de noir de carbone ayant de la silice fixée à sa surface et de polymère diénique fonctionnalisé ou modifié par des fonctions silanols**
Kautschukzusammensetzung enthaltend Russ mit auf seiner Oberfläche fixiertes Siliciumdioxid und ein mit Silanol-Gruppe funktionalisertes oder modifiziertes Dienpolymer
Rubber composition comprising carbon black having silica fixed to its surface and a diene polymer functionalized or modified with silanol groups

(30) Priorité: 07.05.1997 FR 9705887
(43) Date de publication de la demande: 11.11.1998
(73) Titulaire: Compagnie Générale des Etablissements MICHELIN-MICHELIN & CIE, 63040 Clermont-Ferrand Cedex 09 (FR)
(72) Inventeur: Labauze, Gérard, 63100 Clermont-Ferrand (FR)
(74) Mandataire: Cohen, Sylvia

(56) Documents cités:
- EP-A- 0 299 074
- EP-A- 0 711 805

## Description

La présente invention est relative à une composition de caoutchouc utilisable notamment pour la fabrication d'enveloppes de pneumatiques, possédant des propriétés hystérétiques et physiques améliorées à l'état vulcanisé, comprenant un polymère diénique fonctionnalisé ou modifié par des fonctions silanols et à titre de charge renforçante, du noir de carbone ayant de la silice fixée à sa surface.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que, par exemple, des sous-couches, des gommes de liaison entre caoutchoucs de différentes natures ou d'enrobage de renforts métalliques ou textiles, des gommes de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier la nature des polymères et copolymères diéniques en fin de polymérisation au moyen d'agents de couplage ou d'étoilage ou de fonctionnalisation. La très grande majorité de ces solutions se sont essentiellement concentrées sur l'utilisation de polymères modifiés avec du noir de carbone comme charge renforçante dans le but d'obtenir une bonne interaction entre le polymère modifié et le noir de carbone, l'usage de charge blanche, notamment la silice, s'étant révélé inapproprié en raison du faible niveau de certaines propriétés de telles compositions et, par voie de conséquence, de certaines propriétés pneumatiques mettant en oeuvre ces compositions telles que la faible résistance à l'usure. A titre d'exemples illustratifs de cet art antérieur, nous pouvons citer le brevet US-B- 4 677 165 qui décrit la réaction de polymères vivants fonctionnalisés avec des dérivés de la benzophénone pour obtenir des propriétés améliorées dans les compositions contenant du noir de carbone. Dans le même but, le brevet US-B-4 647 625 décrit la fonctionnalisation d'élastomère par réaction de polymères vivants avec la N-méthylpyrrolidine. Les demandes de brevets EP-A-0 590 491 et EP-A-0 593 049 décrivent des polymères portant des fonctions amines permettant une meilleure interaction entre le polymère et le noir de carbone.

Quelques solutions ont également été proposées concernant l'utilisation de la silice à titre de charge renforçante dans des compositions destinées à constituer des bandes de roulement de pneumatiques. Ainsi les demandes de brevets EP-A-0 299 074 et EP-A-0 447 066 décrivent des polymères fonctionnalisés comportant des fonctions alcoxysilanes. Ces polymères fonctionnalisés ont été décrits dans l'art antérieur comme efficace pour réduire l'hystérèse et améliorer la tenue à l'abrasion, cependant leurs propriétés restent insuffisantes pour permettre la mise en oeuvre de ces polymères dans des compositions destinées à constituer des bandes de roulement de pneumatiques. Par ailleurs, la formulation de ces polymères pose des problèmes d'évolution des macrostrutures lors de l'élimination du solvant de polymérisation, ce qui conduit à une sévère dégradation des propriétés potentiellement intéressantes. En outre, cette évolution est très peu contrôlable.

De plus, des réactions de couplage sont souvent observées lors de telles réactions de fonctionnalisation et, afin de les minimiser, un excès d'alcoxysilane et/ou un mélangeage intense sont généralement utilisés.

Cet intérêt pour les compositions renfermant de la silice a été relevé avec la publication de la demande de brevet EP-A-0 501 227 qui divulgue une composition de caoutchouc vulcanisable au soufre obtenue par le travail thermomécanique d'un copolymère de diène conjugué et d'un composé vinylaromatique et l'utilisation d'une silice précipitée particulière obtenue selon le procédé détaillé dans la demande de brevet EP-A-0 157 703. Cette composition qui présente un excellent compromis entre plusieurs propriétés contradictoires, permet la fabrication de pneumatiques ayant une bande de roulement chargée à la silice particulière.

Cependant dans les compositions à base de silice, des agents de liaison en quantité relativement élevée doivent être utilisés pour que ces compositions gardent de bonnes propriétés de résistance mécanique. Ces matériaux ont des conductivités électriques très faibles qui, dans certaines circonstances particulières, ne permettent pas toujours d'évacuer par le sol efficacement l'électricité statique accumulée, et rend souhaitable une réalisation de pneumatiques plus complexe utilisant des solutions anciennes et reprises notamment dans les publications US-B-5 518 055, EP-A-0 705 722 ou EP-A-0 718 126 sous forme d'une zébrure de caoutchouc conductrice traversant la bande de roulement, ou dans la demande de brevet EP-A-0-556 890 sous forme d'une addition de polymères conducteurs particuliers à la composition caoutchoutique constituant la bande de roulement des pneumatiques.

Plus récemment la demande de brevet WO 96/37547 a décrit une composition de caoutchouc utilisant à titre de charge renforçante du noir de carbone ayant de la silice fixée sur sa surface, à base d'un polymère diénique fonctionnalisé ou non et d'un agent de recouvrement et de couplage silane. Cette composition semble présenter des propriétés d'hystérèse améliorées par rapport à des compositions renfermant du noir de carbone à titre de charge renforçante. L'utilisation d'agent de recouvrement et de couplage silane en quantité relativement élevée est cependant toujours nécessaire.

La demanderesse vient de découvrir de manière surprenante que les polymères diéniques portant en extrémité de chaîne une fonction silanol ou un bloc polysiloxane ayant une extrémité silanol, ou modifiés le long de la chaîne par des fonctions silanols, qui ne présentent par ailleurs pas d'évolution macrostruturale lors de leur fonctionnalisation, confèrent aux compositions vulcanisées comprenant du noir de carbone ayant de la silice fixée à sa surface à titre de charge renforçante, des propriétés de caoutchouterie, et en particulier, des propriétés hystérétiques et physiques, améliorées par rapport à des compositions à base de polymères diéniques non fonctionnels ou fonctionnels adaptés au noir de carbone et de même niveau que des compositions à base de polymères diéniques, fonctionnalisés ou non, comportant un agent de liaison et de la silice à titre de charge renforçante avec, de plus, par rapport à ces dernières compositions une nette augmentation de la conductivité électrique.

L'invention concerne une composition de caoutchouc vulcanisable comprenant au moins un polymère diénique fonctionnalisé ou modifié, du noir de carbone ayant de la silice fixée à sa surface à titre de charge renforçante et les autres constituants usuels de telles compositions, caractérisée en ce que le polymère diénique est un polymère diénique fonctionnalisé portant en extrémité de chaîne une fonction silanol ou un bloc polysiloxane ayant une extrémité silanol ou un polymère diénique modifié le long de sa chaîne par des fonctions silanols.

A titre préférentiel de bloc polysiloxane ayant une extrémité silanol conviennent les composés répondant à la formule générale suivante: 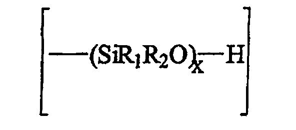 dans laquelle:
- R₁ et R₂, identiques ou différents, représentent un groupe alcoyle ayant de 1 à 8 atomes de carbone,
- x est un nombre entier allant de 1 à 1500 et préférentiellement de 1 à 50.

Par polymères diéniques susceptibles d'être mis en oeuvre dans la composition conforme à l'invention, on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatiques ayant de 8 à 20 atomes de carbone. A titre de diènes conjugués conviennent notamment le butadiène-1,3, le 2-méthyl-1,3-butadiène, les 2,3-di(alcoyle en C₁ à C₅)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc...

A titre de composés vinylaromatiques conviennent notamment le styrène, l'ortho-, méta, paraméthylstyrène, le mélange commercial "vinyltoluène", le para-tertiobutylstyrène, les méthoxystyrènes, le vinylmésitylène, le divinylbenzène, le vinylnaphtalène, etc...

Les copolymères peuvent contenir entre 99 % et 20 % en poids d'unités diéniques et de 1 % à 80 % en poids d'unités vinylaromatiques.

Les polymères diéniques fonctionnalisés portant en extrémité de chaîne une fonction silanol ou un bloc polysiloxane ayant une extrémité silanol, ou modifiés le long de la chaîne par des fonctions silanols peuvent avoir toute microstructure qui est fonction des conditions de polymérisation utilisées. Les polymères peuvent être à blocs, statistiques, séquencés, microséquencés, etc... et être préparés en dispersion ou en solution. Lorsqu'il s'agit d'une polymérisation anionique, la microstructure de ces polymères peut être déterminée par la présence ou non d'un agent modifiant et/ou randomisant et les quantités d'agent modifiant et/ou randomisant employées.

A titre préférentiel conviennent les polybutadiènes et en particulier ceux ayant une teneur en unités-1,2 comprise entre 4 % et 80 %, les polyisoprènes, les copolymères de butadiène-styrène et en particulier ceux ayant une teneur en styrène comprise entre 4 et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %, les copolymères de butadiène-isoprène et notamment ceux ayant une teneur en isoprène comprise entre 5 et 90 % en poids et une température de transition vitreuse (Tg) de -40 °C à -80 °C, les copolymères isoprène-styrène et notamment ceux ayant une teneur en styrène comprise entre 5 et 50 % en poids et une Tg comprise entre -25°C et - 50°C. Dans le cas de copolymères de butadiène-styrène-isoprène conviennent ceux ayant une teneur en styrène comprise entre 5 et 50 % en poids et plus particulièrement comprise entre 10 % et 40 %, en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4% et 85%, une teneur en unités trans-1,4 de la partie butadiénique comprise entre 6 % et 80 %, une teneur en unités-1,2 plus 3,4 de la partie isoprénique comprise entre 5 % et 70 % et une teneur en unités trans-1,4 de la partie isoprénique comprise entre 10 % et 50 % et plus généralement tout copolymère butadiène-styrène-isoprène ayant une Tg comprise entre -20°C et-70°C.

En tant qu'initiateur de polymérisation, on peut utiliser tout initiateur anionique ou non mono- ou polyfonctionnel connu. Toutefois un initiateur contenant un métal alcalin tel que le lithium ou alcalino-terreux tel que le baryum est utilisé à titre préférentiel. Comme initiateurs organolithiens conviennent notamment ceux comportant une ou plusieurs liaisons carbone-lithium. Des composés représentatifs sont les organolithiens aliphatiques tels que l'éthyllithium, le n-butyllithium (n-BuLi), l'isobutyllithium, les polyméthylènes dilithium tels que le 1,4-dilithiobutane, etc... Les amidures de lithium sont également des initiateurs préférés car ils conduisent à des polymères ayant un groupement polaire à l'extrémité de chaîne ne portant pas la fonction silanol ou le bloc polysiloxane ayant une extrémité silanol. L'amidure de lithium est obtenu à partir d'une amine secondaire acyclique ou cyclique, dans ce dernier cas la pyrrolidine et l'hexaméthylèneimine sont hautement préférées ; ledit amidure pouvant être rendu soluble dans un solvant hydrocarboné grâce à l'utilisation conjointe d'un agent de solvatation, un éther par exemple, comme décrit dans le brevet FR 2 250 774. Des composés représentatifs contenant du baryum sont ceux décrits par exemple dans les demandes de brevet FR-A- 2 302 311 et FR-A- 2 273 822 et les certificats d'addition FR-A-2 338 953 et FR-A-2 340 958 dont le contenu est incorporé ici.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

Les polymères diéniques fonctionnalisés fonctionnalisé portant en extrémité de chaîne une fonction silanol ou un bloc polysiloxane ayant une extrémité silanol mis en oeuvre dans l'invention peuvent être obtenus par analogie par divers procédés. Une première voie consiste à faire réagir comme décrit dans Journal of Polymer Science, Part A, Vol. 3, p. 93-103 (1965) le polymère diénique vivant avec un agent de fonctionnalisation organosilane, de préférence en sortie de réacteur de polymérisation et à une température identique ou différente et de préférence voisine de la température de polymérisation, pour former un polymère diénique ayant en extrémité de chaîne une fonction halogénosilane et à le soumettre, comme décrit dans le manuel « Chemistry and Technology of Silicones, Academic Press, New York, N.Y. (1968) p. 95, à l'action d'un donneur de protons pour obtenir le polymère diénique fonctionnalisé silanol en extrémité de chaîne. L'enchaînement de ces 2 réactions a déjà été décrit par Messieurs Greber et Balciunas dans Makromol. Chem. 69, p.193-205 (1963). A titre d'exemples d'agents de fonctionnalisation organosilane susceptibles de réagir avec le polymère diénique vivant, on peut citer les dihalogénosilanes linéaires répondant à la formule:

R₁R₂ Si X₂

dans laquelle:
- R₁ et R₂ identiques ou différents, représentent un groupe alcoyle ayant de 1 à 8 atomes de carbone,
- X représente un atome d'halogène et de préférence le chlore ou le brome.
A titre de composés dihalogénosilanes préférentiels, on peut citer les dichlorodiméthylsilane, dichlorodiéthylsilane, dichlorodiphénylsilane, dichlorophénylméthylsilane, dichlorovinylméthylsilane.

Une seconde voie consiste à faire réagir le polymère vivant avec un agent de fonctionnalisation polysiloxane cyclique pour obtenir un polymère possédant une extrémité SiO⁻ et ce dans un milieu qui ne permet pas la polymérisation du dit cyclopolysiloxane. A titre de polysiloxanes cycliques on peut citer ceux répondant à la formule: 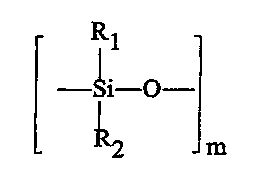 dans laquelle:
- R₁ et R₂ identiques ou différents, représentent un groupe alcoyle ayant de 1 à 8 atomes de carbone,
- m représente un nombre entier de valeur 3 à 8.
et à titre de composés polysiloxanes cycliques préférentiels, on peut citer l'hexaméthylcyclotrisiloxane, le triméthyltriéthylcyclotrisiloxane, l'octaméthylcyclotétrasiloxane, le décaméthylcyclopentasiloxane ainsi que leurs mélanges. Le polymère comportant une extrémité SiO⁻ est ensuite mis à réagir avec un composé donneur de protons pour conduire au polymère diénique fonctionnalisé silanol en extrémité de chaîne.

Une troisième voie consiste à préparer des copolymères à blocs comportant un bloc polysiloxane ayant une extrémité silanol par polymérisation séquencée. Ces copolymères à blocs sont obtenus par la préparation, tel que décrit par exemple dans les brevets US-B-3 483 270, US-B-3 051 684 et J. Appl. Poly. Sci. Vol. 8, p. 2707-2716 (1964) d'un premier bloc d'un polymère diénique vivant qui est ensuite mis à réagir, en milieu polaire, avec un polysiloxane cyclique qui se polymérise anioniquement en formant un second bloc pour conduire à un copolymère à blocs séquencé comportant un bloc polysiloxane ayant une extrémité (SiO⁻) lequel est ensuite mis à réagir avec un donneur de protons pour conduire au copolymère diénique à blocs comportant un bloc polysiloxane ayant une fonction silanol en extrémité de chaîne.

Une quatrième voie consiste à préparer des copolymères à blocs comportant un bloc polysiloxane ayant une extrémité silanol par greffage de 2 polymères, par exemple, par greffage d'un polysiloxane dilithié ou disodé à un polymère diénique ayant une extrémité (Si X), X représentant un atome d'halogène, le produit de greffage étant ensuite mis à réagir avec un donneur de protons pour conduire au copolymère à blocs comportant un bloc polysiloxane ayant une extrémité silanol comme décrit par exemple par MM.Greber et Balciunas dans Makromol Chem. 79, p. 149-160 (1964) ou cité par MM. Plumb et Atherton dans le manuel « Block Copolymers », Applied Science, England (1973) p. 339.

Les polymères diéniques modifiés le long de leur chaîne par des fonctions silanols peuvent également être obtenus par divers procédés dont, par exemple, les première et troisième voies présentées ci-dessus en réalisant une étape préalable de métallation de la chaîne polymérique.

Bien entendu, on peut ajouter un ou plusieurs agents antioxydants au mélange réactionnel avant récupération du polymère fonctionnalisé par les techniques classiques, c'est-à-dire soit par coagulation, soit par évaporation par quelque moyen que ce soit comme par exemple évaporation sous vide puis séchage si c'est nécessaire et même stripping à la vapeur d'eau du solvant, ce qui est tout à fait surprenant pour l'homme de l'art qui s'attendait à une évolution macrostructurale comme c'est habituellement le cas avec des polymères fonctionnalisés par des alcoxysilanes.

Les polymères diéniques fonctionnalisés portant en extrémité de chaîne une fonction silanol ou un bloc polysiloxane ayant une extrémité silanol, ou modifiés le long de la chaîne par des fonctions silanols possèdent une aptitude particulière à être utilisés pour constituer des compositions de caoutchouc comme charge renforçante du noir de carbone ayant de la silice fixée à sa surface.

Le taux de noir de carbone ayant de la silice fixée à sa surface est en général au moins égal à 30 parties en poids de polymère.

Ce noir de carbone ayant de la silice fixée à sa surface peut être utilisé en coupage avec d'autres charges renforçantes telles que du noir de carbone ou des charges blanches, notamment la silice. Le pourcentage relatif de ces charges peut être ajusté en fonction du compromis de propriétés de la composition souhaité par l'homme de l'art.

Le taux de silice présent à la surface du noir de carbone représente en général de 0,1 à 50% en poids, préférablement de 0,3 à 30%. Ce noir de carbone ayant de la silice fixée à sa surface peut être obtenu par différents modes de fabrication. On citera, à titre d'exemple, les modes de fabrication décrits dans la demande de brevet EP-A-0 711 805, la demande de brevet japonais N°63-63755 ou le procédé de fabrication de l'ECOBLACK CRX2000 commercialisé par la société CABOT et décrit dans la demande de brevet WO96/37547.

A titre de silice susceptible d'être mise en oeuvre dans l'invention conviennent toutes les silices précipitées ou pyrogénées connues de l'homme de l'art et en particulier, les silices hautement dispersibles. Par silice hautement dispersible, on entend toute silice ayant une aptitude à la désagglomération et à la dispersion dans une matrice polymérique très importante observable par microscopie électronique ou optique, sur coupes fines. La dispersibilité de la silice est également appréciée au moyen d'un test d'aptitude à la désagglomération aux ultrasons suivi d'une mesure, par diffraction sur un granulomètre, de la taille des particules de silice pour déterminer le diamètre médian (D50) des particules et le facteur de désagglomération (F_{D}) après désagglomération comme décrit dans la demande de brevet EP-A-0.520.860 dont le contenu est incorporé ici ou dans l'article paru dans la revue Rubber World, juin 1994, pages 20-24, intitulé « Dispersibility measurements of prec. silicas ».

Comme exemples non limitatifs de telles silice, on peut citer la silice Perkasil KS 430 de la société AKZO, les silices Zeosil 1165 MP et 85 MP de la société Rhône-Poulenc, la silice HI-Sil 2000 de la société PPG, les silices Zeopol 8741 ou 8745 de la société Huber.

Comme noirs de carbone conviennent tous les noirs de carbone commercialement disponibles ou conventionnellement utilisés dans les pneus et particulièrement dans les bandes de roulement de pneus. A titre d'exemples non limitatifs de tels noirs on peut citer les noirs N 234, N 339, N 326, N 375, etc...

Le polymère diénique fonctionnalisé ou modifié silanol peut-être utilisé seul dans la composition conforme à l'invention ou être utilisé en coupage avec tout autre élastomère conventionnellement utilisé dans les pneus tel que du caoutchouc naturel ou un coupage à base de caoutchouc naturel et un élastomère synthétique ou encore un autre polymère diénique éventuellement couplé et/ou étoilé ou encore partiellement ou entièrement fonctionnalisé avec une fonction autre qu'une fonction silanol. Il est évident que plus la proportion d'élastomère conventionnel présent dans la composition conforme à l'invention est importante, moindre sera l'amélioration des propriétés. C'est pourquoi l'élastomère conventionnel peut être présent entre 1 et 50 parties en poids pour 100 parties en poids de polymère fonctionnalisé ou modifié silanol.

Les compositions conformes à l'invention contiennent, outre un ou plusieurs polymères diéniques et le noir de carbone ayant de la silice fixée à sa surface, tout ou partie des autres constituants et additifs habituellement utilisés dans les mélanges de caoutchouc comme des plastifiants, pigments, antioxydants, cires anti-ozonantes, un système de vulcanisation à base soit de soufre et/ou de peroxyde et/ou de bismaleimides, des accélérateurs de vulcanisation, des huiles d'extension, un ou des agents de liaison avec l'élastomère et/ou de recouvrement de la silice tels que des alcoxysilanes, polyols, amines, etc...

L'invention a également pour objet des bandes de roulement de pneumatiques et des pneumatiques possédant une résistance au roulement réduite.

L'invention est illustrée à titre non limitatif par les exemples qui ne sauraient constituer une limitation de la portée de l'invention.

Dans les exemples, les propriétés des compositions sont évaluées comme suit :
- Viscosité Mooney ML (1+4) à 100°C, mesurée selon la norme ASTM:D-1646, intitulée Mooney dans les tableaux.
- Modules d'allongement à 300 % (MA 300), 100 % (MA100) et 10 % (MA 10) : mesures effectuées selon la norme ISO 37.
- Indices de cassage Scott : mesurés à 20°C (Force à la rupture en MPa, Fr, Allongement à la rupture en %, Ar)
- Pertes hystérétiques mesurées à 60°C en %. La déformation pour les pertes mesurées est de 35%
- Dureté Shore A : mesures effectuées selon la norme DIN 53505
- Propriétés dynamiques en cisaillement :
   Mesures effectuées en fonction de la déformation à 10 à 23°C.
   La non linéarité Δ G exprimée en MPa est la différence de module de cisaillement entre 0.15 % et 50 % de déformation crête-crête.
   L'hystérèse est exprimée par la mesure du maximum de G" et du maximum de tgδ à 23°C et à environ 7 % de déformation, respectivement notés G" _{max 23°} et tgδ _{max 23°}, selon la norme ASTM D2231-71 (réapprouvée en 1977).
- La résistivité volumique (ρᵥ) est mesurée, en ohm.cm, selon la norme ASTM D257, sa valeur est comprise entre 10⁵ et 10¹⁰ Ωcm. Son expression sera donnée sous la forme de son logarithme en base 10, noté Log résistivité.

### Exemple 1

Cet exemple a pour but de comparer les propriétés d'une composition à base d'un polymère fonctionnalisé portant en extrémité de chaîne une fonction silanol à deux autres compositions à base des mêmes polymères mais dont respectivement l'un n'est pas fonctionnalisé et l'autre est fonctionnalisé avec un agent de fonctionnalisation connu dans l'état de la technique, ces trois compositions possédant à titre de charge renforçante du noir de carbone ayant de la silice fixée à sa surface.

Dans tous les essais de cet exemple, le polymère diénique est un copolymère butadiène-styrène ayant un taux de 1, 2 butadiènique de 40%, un taux de styrène de 25%, une température de transition vitreuse Tg de -38°C et une viscosité Mooney de 60.

Les copolymères butadiène-styrènes mis en oeuvre dans les trois compositions sont :
- pour l'essai A, un copolymère portant une fonction silanol terminale, fonctionnalisé (SBR-A) à cet effet à l'aide d'un agent de fonctionnalisation siloxane cyclique constitué par de l'hexaméthylcyclotrisiloxane, D3,
- pour l'essai B, un copolymère fonctionnalisé (SBR-B) avec la bis-diéthylaminobenzophénone, DEAB, reconnue pour permettre l'obtention de compositions ayant de bonnes propriétés hystérétiques avec le noir de carbone,
- pour l'essai C, un copolymère non fonctionnalisé (SBR-C) stoppé au méthanol.

Ces SBR ont été synthétisés en continu dans le toluène comme solvant de polymérisation et avec le butyl lithium comme initiateur. Ainsi pour tous les essais, le copolymère est préparé dans un réacteur de 32 litres de capacité utile avec agitateur du type turbine, dans lequel on introduit en continu du toluène, du butadiène, du styrène et du THF dans un rapport massique 100 : 10 : 4,3 : 0,3 et une solution de 500 micromoles de n-BuLi actif pour cent grammes de monomères. Les débits des différentes solutions sont calculés pour avoir un temps moyen de séjour de 45 minutes sous forte agitation. La température est maintenue constante à 60°C. En sortie de réacteur la conversion mesurée est de 88% et le SBR contient 25% de styrène incorporé (en masse) et une teneur de 40% en liaisons-1,2 pour la partie butadiénique.

Pour obtenir le SBR-A, on ajoute en sortie du réacteur, à l'entrée d'un mélangeur statique de l'hexaméthylcyclotrisiloxane (D3) dans un rapport D3/n-BuLi actif =0,48. Dans le cadre de la synthèse du SBR-C, le D3 est remplacé par du méthanol dans un rapport MeOH/n-BuLi actif=1,5. Dans le cadre de la synthèse du SBR-B, la DEAB est ajoutée à la place du méthanol dans un rapport DEAB/n-BuLi actif = 1,5.

Les taux de fonctionnalisation (Fn) sont calculés par RMN¹H et suite à la détermination de la masse moléculaire obtenue par osmométrie. La masse moléculaire dans les trois cas est de 175000 g.mol⁻¹. Le nombre de milliéquivalent par Kilogramme correspondant au motif [-Si(CH₃)₂OH] pour le polymère fonctionnalisé SBR-A est de 4,6, soit un taux de fonctionnalisation de 80%; le nombre de milliéquivalent par Kilogramme correspondant au motif [(C₂H₅)₂N-C₆H₄]₂COH pour le polymère fonctionnalisé SBR-B étant de 4,7 soit un taux de fonctionnalisation de 82%.

Dans les trois cas, après 5 minutes, on ajoute 0,8 partie pour cent parties d'élastomère (pce) de 2,2'-méthylène bis(4-méthyl-6tertiobutylophénol) et 0,2 pce de N-(1,3-diméthylbutyl)-N'-phényl-p-phénylènediamine en tant qu'anti-oxydants. Les polymères sont récupérés par l'opération classique de récupération par stripping à la vapeur d'eau du solvant puis séchés sur outil à cylindres à 100°C pendant 10 minutes.

A l'aide des 3 copolymères SBR-A, B et C, on prépare comme connu en soi, 3 compositions de caoutchouc respectivement A1, B1 et C1 renforcées par un noir de carbone ayant de la silice fixée à sa surface, selon la formulation suivante où toutes les parties son exprimées en poids :

| | |
|---|---|
| Elastomère | 100 |
| Noir traité silice(*) | 60 |
| Huile aromatique | 25 |
| Agent de liaison(**) | 1,8 |
| Oxyde de zinc | 2,5 |
| Acide stéarique | 1,5 |
| Antioxydant (a) | 1,9 |
| Paraffine (b) | 1,5 |
| Soufre | 1,1 |
| Sulfénamide (c) | 2 |
| Diphénylguanidine | 0,42 |

| | |
|---|---|
| (*) Le noir de carbone ayant de la silice fixée à sa surface est un noir commercialisé par la société CABOT sous la dénomination NOIR ECOBLACK CRX2000 (% Si : 2,74 sans traitement HF/ 0,33% après traitement HF; surface spécifique (N2) : 138,9 m²/g sans traitement HF, 179,6 m²/g après traitement HF). | |
| (**) Organosilane polysulfuré commercialisé par la Société Degussa sous la dénomination SI69. (a) :Antioxydant : N-(1,3-diméthyl-butyl)-N'-phényl-p-phénylènediamine (b) : Paraffine : mélange de cires macro et microcristallines (c) : Suifénamide : N-cyclohexyl-2-benzothiazyl sulfénamide | |

Les 3 copolymères décrits ci-dessus sont mis en oeuvre dans une composition réalisée selon la méthode décrite dans la demande de brevet EP-A-0 501 227, étant précisé qu'on opère un travail thermo-mécanique en deux étapes qui durent respectivement 5 et 4 minutes, pour une vitesse moyenne des palettes de 45 tours/minute jusqu'à atteindre une température maximale de tombée identique de 160°C tandis que l'introduction du système de vulcanisation est effectué à 30°C sur un outil à cylindres.

La vulcanisation est effectuée à 150°C pendant 50 minutes. On compare entre elles les propriétés de ces 3 compositions tant à l'état non vulcanisé qu'à l'état vulcanisé.

Les résultats sont consignés dans le tableau 1.

**TABLEAU 1**

| | | | | |
|---|---|---|---|---|
| Compositions | | A1 | B1 | C1 |
| Stoppeur | | D3 | DEAB | MeOH |

| Propriétés à l'état non vulcanisé | | | | |
|---|---|---|---|---|
| ML(1+4)100° | | 86 | 87,5 | 75,5 |

| Propriétés à l'état vulcanisé | | | | |
|---|---|---|---|---|
| Log résistivité | | 9,38 | 8,14 | 7,98 |
| Shore | | 55,9 | 58,8 | 59,7 |
| MA10 | | 3,33 | 4,15 | 4,14 |
| MA100 | | 1,50 | 1,56 | 1,56 |
| MA300 | | 2,43 | 2,32 | 2,32 |
| MA300/MA100 | | 1,62 | 1,49 | 1,49 |
| Scott | 20°C Fr | 19,4 | 23,7 | 21,2 |
| | 20°C Ar % | 420 | 585 | 530 |
| PH 60°C | | 19,7 | 24,4 | 26,1 |

| Propriétés dynamiques en fonction de la déformation | | | | |
|---|---|---|---|---|
| Δ G _{à 23°C} | | 0,95 | 2,29 | 2,60 |
| G'' _{max 23°} | | 0,40 | 0,70 | 0,83 |
| tgδ _{max 23°} | | 0,23 | 0,29 | 0,33 |

On constate au niveau des propriétés à l'état vulcanisé, que la composition A1 à base de SBR-A (fonctionnalisé silanol) présente des propriétés hystérétiques nettement meilleures que la composition C1 comportant le SBR-C (stoppé méthanol) à faible (G" _{max 23°}; tgδ _{max 23°}) et à forte (PH 60°C) déformation sans dégrader les autres propriétés par rapport au mélange avec le SBR-C.

Les propriétés de la composition A1 sont également meilleures que celles obtenues avec la composition B1 (SBR-B fonctionnalisé DEAB).

### Exempt 2:

Cet exemple a pour objet de comparer la composition de caoutchouc A1 selon l'invention (contenant un polymère fonctionnalisé silanol et du noir de carbone ayant de la silice fixée à sa surface) avec une composition B2 contenant respectivement le SBR-B fonctionnalisé grâce au DEAB et une charge constituée par du noir de carbone, et une composition C2 comprenant le SBR-C, une charge constituée par de la silice et un agent de de recouvrement et de couplage silane. Ces deux dernières compositions, B2 et C2, étant reconnues pour donner respectivement pour le noir de carbone et la silice de bonnes propriétés hystérétiques.

On suit le même méthode de fabrication que celui décrit dans l'exemple 1 pour la composition C1.

Ces compositions ont les formulations suivantes :

| Composition B2 | | Composition C2 | |
|---|---|---|---|
| Elastomère | 100 | Elastomère | 100 |
| Noir de carbone N234 | 60 | Silice(*) | 60 |
| Huile aromatique | 25 | Huile aromatique | 25 |
| | | Agent de liaison(**) | 4,8 |
| Oxyde de zinc | 3 | Oxyde de zinc | 2,5 |
| Acide stéarique | 2 | Acide stéarique | 1,5 |
| Antioxydant (a) | 1,9 | Antioxydant (a) | 1,9 |
| Paraffine (b) | 1,5 | Paraffine (b) | 1,5 |
| Soufre | 1,2 | Soufre : | 1,1 |
| Sulfénamide (c) | 1,2 | Sulfénamide (c) | 2 |
| | | Diphénylguanidine | 1,5 |

| | | | |
|---|---|---|---|
| (*) Silice : ZEOSIL 1165 commercialisée par la société Rhône-Poulenc. | | | |
| (**) Organosilane polysulfuré commercialisé par la Société Degussa sous la dénomination SI69. | | | |

Les résultats obtenus sont reportés dans le tableau 2

**TABLEAU 2**

| | | | | |
|---|---|---|---|---|
| Compositions | | A1 | B2 | C2 |
| Stoppeur | | D3 | DEAB | MeOH |
| Charge | | Noir traité silice | Noir | Silice |

| Propriétés à l'état non vulcanisé | | | | |
|---|---|---|---|---|
| ML(1+4)100° | | 86 | 90 | 68,5 |

| Propriétés à l'état vulcanisé | | | | |
|---|---|---|---|---|
| Log résistivité | | 9,38 | 5,3 | >10 |
| Shore | | 55,9 | 60 | 58,4 |
| MA10 | | 3,33 | 4,44 | 4,16 |
| MA100 | | 1,50 | 1,51 | 1,37 |
| MA300 | | 2,43 | 2,02 | 1,53 |
| MA300/MA100 | | 1,62 | 1,34 | 1,12 |
| Scott | 20°C Fr | 19,4 | 22,7 | 23,0 |
| | 20°C Ar % | 420 | 650 | 705 |
| PH 60°C | | 19,7 | 30 | 26,1 |

| Propriétés dynamiques en fonction de la déformation | | | | |
|---|---|---|---|---|
| Δ G _{à 23°C} | | 0,95 | 4,84 | 1,88 |
| G'' _{max 23°} | | 0,40 | 1,25 | 0,58 |
| tgδ _{max 23°} | | 0,23 | 0,36 | 0,25 |

On constate que la composition A1 (avec SBR-A fonctionnalisé silanol) comprenant le noir ECOBLACK CRX2000 présente une très forte diminution de l'hystérèse (à faible et forte déformation) de l'ordre de 30% par rapport à celle obtenue de la composition B2 à base de noir de carbone sans détériorer les autres propriétés.

De plus, on note que la composition A1 présente des propriétés hystérétiques améliorées même par rapport à la composition C2 à base de silice avec un niveau de conductivité fortement réduit.

### Exemple 3:

Dans cet exemple, on compare trois compositions A3, C3 et B3 respectivement à base des SBR-A (fonctionnalisé avec D3), SBR-C (stoppé avec MeOH) et SBR-B (fonctionnalisé DEAB) ne contenant pas d'agent de liaison mais du noir de carbone ayant de la silice fixée à sa surface à titre de charge renforçante.

Les compositions A3, C3 et B3 sont réalisées selon la méthode présentée dans l'exemple 1, et ont la formulation suivante :

| | |
|---|---|
| Elastomère | 100 |
| Noir traité silice(*) | 60 |
| Huile aromatique | 25 |
| Agent de liaison | 0 |
| Oxyde de zinc | 2,5 |
| Acide stéarique | 1,5 |
| Antioxydant (a) | 1,9 |
| Paraffine (b) | 1,5 |
| Soufre | 1,1 |
| Sulfénamide (c) | 2 |
| Diphénylguanidine | 0,42 |

| | |
|---|---|
| (*) le noir de carbone ayant de la silice fixée à sa surface est un noir commercialisé par la société CABOT sous la dénomination NOIR ECOBLACK CRX2000 (% Si : 2,74 sans traitement HF/ 0,33% après traitement HF; surface spécifique (N2) : 138,9 m²/g sans traitement HF, 179,6 m²/g après traitement HF). | |

Les résultats obtenus sont consignés dans le tableau 3.

**TABLEAU 3**

| | | | | |
|---|---|---|---|---|
| Compositions | | A3 | B3 | C3 |
| Stoppeur | | D3 | DEAB | MeOH |

| Propriétés à l'état non vulcanisé | | | | |
|---|---|---|---|---|
| ML(1+4)100° | | 88,2 | 91,5 | 76,5 |

| Propriétés à l'état vulcanisé | | | | |
|---|---|---|---|---|
| Log résistivité | | 8,52 | 7,09 | 6,79 |
| Shore | | 53,3 | 57,3 | 58,1 |
| MA10 | | 3,10 | 4,13 | 4,35 |
| MA100 | | 1,23 | 1,32 | 1,30 |
| MA300 | | 1,80 | 1,65 | 1,61 |
| MA300/MA100 | | 1,46 | 1,25 | 1,24 |
| Scott | 20°C Fr | 21,5 | 21,9 | 20,8 |
| | 20°C Ar % | 575 | 670 | 685 |
| PH 60°C | | 22,9 | 28,8 | 33,4 |

| Propriétés dynamiques en fonction de la déformation | | | | |
|---|---|---|---|---|
| Δ G _{à 23°C} | | 1,10 | 3,03 | 3,83 |
| G'' _{max 23°} | | 0,45 | 0,78 | 0,97 |
| tgδ _{max 23°} | | 0,25 | 0,38 | 0,38 |

On constate que même sans utilisation d'agent de recouvrement et de liaison, la composition A3 utilisant le SBR-A (fonctionnalisé silanol) présente un niveau d'hystérèse à faible (G" _{max 23}; tg δ _{max 23°}) et forte (PH 60°C) déformation très bas par rapport aux deux autres compositions qui comprennent également du noir de carbone ayant de la silice fixée à sa surface à titre de charge renforçante, sans qu'il y ait de dégradation des autres propriétés.

De plus, on observe une légère détérioration des propriétés hystérétiques des compositions B3 et C3 à base respectivement de SBR-B et SBR-C relativement aux compositions B2 et C2 de l'exemple 2 à base des mêmes polymères mais contenant un agent de recouvrement et de liaison, alors qu'au contraire les propriétés hystérétiques de la composition A3 sont presque aussi bonnes que celles de la composition A1 contenant un agent de recouvrement et de liaison.

Il faut également souligner que les autres propriétés de cohésion mécanique (MA300, force et allongement à la rupture) de la composition A3 ne sont pas non plus dégradées par rapport à la composition A1, pas plus que le niveau de conductibilité.

### Exemple 4

Cet exemple a pour but de comparer les compositions A1 et C1 de l'exemple 1 à base respectivement de SBR stoppé au méthanol et fonctionnalisé silanol, à une composition de même formulation F1 mais utilisant un SBR différent.

Ce SBR-F est synthétisé en continu comme dans l'exemple 1, avec comme solvant de polymérisation le cyclohexane et comme initiateur l'hexaméthylèneiminelithium (HMINLi). Il est fonctionnalisé à l'aide de l'hexaméthylcyclotrisiloxane (D3), la méthode de préparation de la composition F1 étant identique à celle utilisée pour les compositions A1 et C1.

Les résultats obtenus sont consignés dans le tableau 4.

**TABLEAU 4**

| | | | | |
|---|---|---|---|---|
| Compositions | | A1 | C1 | F1 |
| Catalyseur | | BuLi | BuLi | HMIMLi |
| Stoppeur | | D3 | MeOH | D3 |

| Propriétés à l'état non vulcanisé | | | | |
|---|---|---|---|---|
| ML(1+4)100° | | 86 | 75,5 | 120 |

| Propriétés à l'état vulcanisé | | | | |
|---|---|---|---|---|
| Log résistivité | | 9,38 | 7,98 | 10 |
| Shore | | 55,9 | 59,7 | 58,1 |
| MA10 | | 3,33 | 4,14 | 3,71 |
| MA100 | | 1,50 | 1,56 | 1,72 |
| MA300 | | 2,43 | 2,32 | 2,70 |
| MA300/MA100 | | 1,62 | 1,49 | 1,57 |
| Scott | 20°C Fr | 19,4 | 21,2 | 19,6 |
| | 20°C Ar % | 420 | 530 | 415 |
| PH 60°C | | 19,7 | 26,1 | 18,0 |

| Propriétés dynamiques en fonction de la déformation | | | | |
|---|---|---|---|---|
| Δ G _{à 23°C} | | 0,95 | 2,60 | 0,93 |
| G'' _{max 23°} | | 0,40 | 0,83 | 0,39 |
| tgδ _{max 23°} | | 0,23 | 0,33 | 0,21 |

Au vu des propriétés à l'état vulcanisé, on remarque que la composition F1, utilisant le polymère SBR-A fonctionnalisé silanol mais avec un catalyseur différent de celui de la composition A1, présente des propriétés d'hystérèse à faible et forte déformation fortement améliorées par rapport à la composition C1 à base de SBR-C stoppé au méthanol et aussi bonnes, sinon meilleures, que celles obtenues avec la composition A1.

Ainsi, il apparaît clairement que l'amélioration de propriétés hystérétiques, sans dégradation des autres propriétés, obtenues par l'utilisation d'un polymère fonctionnalisé silanol en présence d'une charge renforçante constituée par du noir de carbone ayant de la silice fixée à sa surface, est indépendante du choix du catalyseur.

### Exemple 5

Cet exemple a pour but de comparer une composition G5 conforme à l'invention à deux autres compositions H5 et I5 à base de SBR commerciaux.

Les compositions G5, H5 et 15 sont synthétisées en discontinu à base respectivement des SBR qui suivent :
- le SBR-G est synthétisé en discontinu dans le cyclohexane et fonctionnalisé à l'aide de D3 selon la méthode précisée dans ce qui suit,
- le T0589 fabriqué par la société JAPAN SYNTHETIC RUBBER, est un polymère modifié spécifiquement pour réagir avec la silice, ayant les caractéristiques suivantes Tg = -32°C, %1,2 = 41%, %sty = 33%, ML(1+4)100° = 45.,
- le NS116 fabriqué par la société NIPPON ZEON, est un polymère modifié spécifiquement pour réagir avec le noir de carbone, ayant les caractéristiques suivantes Tg = -25°C, %1,2 = 60%, %sty = 21%, ML(1+4)100° = 50.

Le SBR-G est synthétisé en discontinu de la façon suivante :

Dans un réacteur de 10 litres contenant 4,6 litres de cyclohexane désaéré, on injecte 211g de styrène, 429g de butadiène et 2000 ppm de THF. Les impuretés sont neutralisées à l'aide de n-BuLi puis on ajoute 0,0033 mole de n-BuLi ainsi que 0,001 mole de tertiobutylate de sodium utilisé comme agent randomisant, la polymérisation est conduite à 55°C.

A 90% de conversion, on injecte dans le réacteur 0,0011 mole d'hexaméthylcylcotrisiloxane (D3). La solution de polymère est agitée pendant 15 minutes à 55°C. Le polymère est antioxydé par addition de 0,80 pce de 2,2-méthylène bis(4-méthyl-6-tertiobutylméthylphénol) et de 0,20 pce de N-(1,3-diméthylbutyl)-N'-phényl-p-phénylène diamine, puis récupéré par stripping à la vapeur d'eau et séché sur outil à cylindres à 100°C.

La viscosité Mooney (ML(1+4)100°) est de 46, le pourcentage massique de styrène incorporé (%sty), déterminé par RMN¹H est de 33% et le taux d'enchaînements vinyliques de la partie butadiénique (%1,2) est de 41%.

L'analyse RMN donne un taux de fonctionnalisation [-Si(CH₂)₂]-OH de 4 méq/Kg, ce qui compte tenu de la masse moléculaire du copolymère donnée par l'osmométrie (175000g/mol), correspond à un taux de fonctionnalisation [SiOH] d'environ 70%.

Les trois compositions G5, H5 et I5 possédent la même formulation que celle précisée dans l'exemple 1 à base de noir de carbone ayant de la silice fixée à sa surface (ECOBLACK CRX2000), la méthode de préparation de ces compositions est également identique à celle utilisée pour la composition A1 de l'exemple 1.

Les résultats obtenus sont consignés dans le tableau 5.

**TABLEAU 5**

| | | | | |
|---|---|---|---|---|
| Compositions | | G5 | H5 | I5 |
| SBR | | SBR-G | T0589 | NS116 |

| Propriétés à l'état non vulcanisé | | | | |
|---|---|---|---|---|
| ML(1+4)100° | | 109 | 56 | 48 |

| Propriétés à l'état vulcanisé | | | | |
|---|---|---|---|---|
| Log résistivité | | 10 | 7,84 | 7,48 |
| Shore | | 56,8 | 58,6 | 59,8 |
| MA10 | | 3,58 | 4,39 | 4,47 |
| MA100 | | 1,71 | 1,72 | 1,70 |
| MA300 | | 2,98 | 2,60 | 2,49 |
| MA300/MA100 | | 1,74 | 1,51 | 1,46 |
| Scott | 20°C Fr | 22,6 | 23,3 | 20,8 |
| | 20°C Ar % | 445 | 535 | 515 |
| PH 60°C | | 17,5 | 29,0 | 29,1 |

| Propriétés dynamiques en fonction de la déformation | | | | |
|---|---|---|---|---|
| Δ G _{à 23°C} | | 1,03 | 2,47 | 2,60 |
| G'' _{max 23°} | | 0,526 | 0,0951 | 0,977 |
| tgδ _{max 23°} | | 0,266 | 0,341 | 0,364 |

On constate, au vu des propriétés à l'état vulcanisé, que seule la composition G5 à base d'un SBR-G conforme à l'invention permet d'obtenir des propriétés d'hystérèse très faibles et des propriétés de renforcement très élevées.

Il apparaît donc que l'utilisation de n'importe quel polymère fonctionnalisé adapté à du noir de carbone, ne permet pas d'obtenir une amélioration des propriétés hystérétiques et physiques lors de son utilisation dans une composition à base de noir traité silice (ici l'ECOBLACK CRX2000), pas plus que la transposition de n'importe quel polymère fonctionnalisé spécifiquement pour la silice à une composition comportant du noir traité silice à titre de charge renforçante.

## Revendications

1. Composition de caoutchouc vulcanisable comprenant au moins un polymère diénique, du noir de carbone ayant de la silice fixée à sa surface à titre de charge renforçante, **caractérisée en ce que** le polymère diénique est un polymère diénique fonctionnalisé portant en extrémité de chaîne une fonction silanol ou un bloc polysiloxane ayant une extrémité silanol ou un polymère diénique modifié le long de sa chaîne par des fonctions silanols.

2. Composition selon la revendication 1, **caractérisée en ce que** le bloc polysiloxane ayant une extrémité silanol répond à la formule: 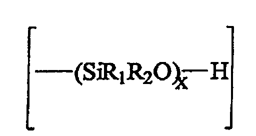 dans laquelle:
- R₁ et R₂ identiques ou différents représentent un groupe alcoyle ayant de 1 à 8 atomes de carbone,
- x est un nombre entier allant de 1 à 1500.

3. Composition selon la revendication 2, **caractérisée en ce que** R1, R2 représentent un groupe alcoyle ayant de 1 à 5 atomes de carbone et préférentiellement le groupe méthyl.

4. Composition selon l'une quelconque des revendications 1 à 3, **caractérisée en ce que** le polymère diénique est un copolymère de butadiène-styrène ou de butadiène-styrène-isoprène.

5. Composition selon la revendication 4, **caractérisée en ce qu'**elle comprend en outre du polybutadiène et/ou un copolymère de butadiène-isoprène et/ou du caoutchouc naturel.

6. Composition selon l'une quelconque des revendications 1 à 5, **caractérisée en ce que** le taux de silice présent à la surface du noir de carbone représente de 0,1 à 50% en poids.

7. Composition selon la revendication 6, **caractérisée en ce que** le taux de silice présent à la surface du noir de carbone représente de 0,3 à 30% en poids.

8. Composition selon l'une quelconque des revendications 1 à 7, **caractérisée en ce que** le noir de carbone ayant de la silice fixée à sa surface est utilisé en coupage avec d'autres charges renforçantes.

9. Pneumatique comprenant une composition de caoutchouc vulcanisée comprenant au moins un polymère diénique, du noir de carbone ayant de la silice fixée à sa surface à titre de charge renforçante, **caractérisé en ce que** le polymère diénique est un polymère diénique fonctionnalisé portant en extrémité de chaîne une fonction silanol ou un bloc polysiloxane ayant une extrémité silanol ou un polymère diénique modifié le long de sa chaîne par des fonctions silanols.

10. Pneumatique selon la revendication 9, **caractérisé en ce que** la composition entre dans la constitution de la bande de roulement.

11. Bande de roulement de pneumatique constituée par une composition de caoutchouc vulcanisée comprenant au moins un polymère diénique, du noir de carbone ayant de la silice fixée à sa surface, **caractérisée en ce que** le polymère diénique est un polymère diénique fonctionnalisé portant en extrémité de chaîne une fonction silanol ou un bloc polysiloxane ayant une extrémité silanol ou un polymère diénique modifié le long de sa chaîne par des fonctions silanols.

## Claims

1. A vulcanisable rubber composition comprising at lest one diene polymer and carbon black having silica fixed to its surface as reinforcing filler, **characterised in that** the diene polymer is a functionalised diene polymer carrying at its chain end a silanol function or a polysiloxane block having a silanol end, or a diene polymer modified along its chain by silanol functions.

2. A composition according to Claim 1, **characterised in that** the polysiloxane block having a silanol end has the formula: 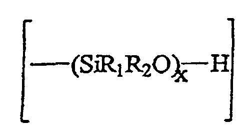 wherein:
- R₁ and R₂, which are the same or different, represent an alkyl group containing 1 to 8 carbon atoms, and
- x is an integer ranging from 1 to 1500.

3. A composition according to Claim 2, **characterised in that** R₁ and R₂ represent an alkyl group containing 1 to 5 carbon atoms, and preferably the methyl group.

4. A composition according to any one of Claims 1 to 3, **characterised in that** the diene polymer is a butadiene-styrene copolymer or a butadiene-styrene-isoprene copolymer.

5. A composition according to Claim 4, **characterised in that** it also comprises polybutadiene and/or a butadiene-isoprene copolymer and/or natural rubber.

6. A composition according to any one of Claims 1 to 5, **characterised in that** the amount of silica present on the surface of the carbon black is from 0.1 to 50% by weight.

7. A composition according to Claim 6, **characterised in that** the amount of silica present on the surface of the carbon black is from 0.3 to 30% by weight.

8. A composition according to any one of Claims 1 to 7, **characterised in that** the carbon black having silica fixed to its surface is used in a blend with other reinforcing fillers.

9. A tyre comprising a vulcanised rubber composition comprising at least one diene polymer and carbon black having silica fixed to its surface as reinforcing filler, **characterised in that** the diene polymer is a functionalised diene polymer having at its chain end a silanol function or a polysiloxane block having a silanol end or a diene polymer modified along its chain by silanol functions.

10. A tyre according to Claim 9, **characterised in that** the composition enters into the make-up of the tread.

11. A tyre tread consisting of a vulcanised rubber composition comprising at least one diene polymer and carbon black having silica fixed to its surface, **characterised in that** the diene polymer is a functionalised diene polymer carrying at the end of its chain a silanol function or a polysiloxane block having a silanol end or a diene polymer modified along its chain by silanol functions.

## Patentansprüche

1. Vulkanisierbare Kautschukmischung, die mindestens ein Dienpolymer und als verstärkenden Füllstoff Ruß, an dessen Oberfläche Siliciumdioxid fixiert ist, enthält, **dadurch gekennzeichnet, dass** das Dienpolymer ein funktionalisiertes Dienpolymer, das am Kettenende eine Silanol-Gruppe oder einen Polysiloxanblock mit einer endständigen Silanol-Gruppe aufweist, oder ein Dienpolymer ist, das entlang der Kette mit Silanol-Gruppen modifiziert ist.

2. Zusammensetzung nach Anspruch 1, **dadurch gekennzeichnet, dass** der Polysiloxanblock mit endständiger Silanol-Gruppe der folgenden Formel entspricht:
[―(SiR₁R₂O)ₓ―H]
worin bedeuten:
- R₁ und R₂, die identisch oder voneinander verschieden sind, eine Alkylgruppe mit 1 bis 8 Kohlenstoffatomen, und
- x eine ganze Zahl im Bereich von 1 bis 1500.

3. Zusammensetzung nach Anspruch 2, **dadurch gekennzeichnet, dass** R₁ und R₂ eine Alkylgruppe mit 1 bis 5 Kohlenstoffatomen und vorzugsweise Methyl bedeuten.

4. Zusammensetzung nach einem der Ansprüche 1 bis 3, **dadurch gekennzeichnet, dass** das Dienpolymer ein Butadien-Styrol-Copolymer oder Butadien-Styrol-Isopren-Copolymer ist.

5. Zusammensetzung nach Anspruch 4, **dadurch gekennzeichnet, dass** sie außerdem Polybutadien und/oder ein Butadien-Isopren-Copolymer und/oder Naturkautschuk enthält.

6. Zusammensetzung nach einem der Ansprüche 1 bis 5, **dadurch gekennzeichnet, dass** der an der Oberfläche des Rußes vorliegende Siliciumdioxid-Gehalt 0,1 bis 50 Gew.-% ausmacht.

7. Zusammensetzung nach Anspruch 6, **dadurch gekennzeichnet, dass** der an der Oberfläche des Rußes vorliegende Siliciumdioxid-Gehalt 0,3 bis 30 Gew.-% ausmacht.

8. Zusammensetzung nach einem der Ansprüche 1 bis 7, **dadurch gekennzeichnet, dass** der Ruß, an dessen Oberfläche Siliciumdioxid fixiert ist, im Verschnitt mit weiteren verstärkenden Füllstoffen verwendet wird.

9. Luftreifen, der eine vulkanisierte Kautschukmischung enthält, die mindestens ein Dienpolymer und als verstärkenden Füllstoff Ruß, an dessen Oberfläche Siliciumdioxid fixiert ist, enthält, **dadurch gekennzeichnet, dass** das Dienpolymer ein funktionalisiertes Dienpolymer, das am Kettenende eine Silanol-Gruppe oder einen Polysiloxanblock mit einer endständigen Silanol-Gruppe aufweist, oder ein Dienpolymer ist, das entlang der Kette mit Silanol-Gruppen modifiziert ist.

10. Luftreifen nach Anspruch 9, **dadurch gekennzeichnet, dass** die Zusammensetzung in dem Laufstreifen enthalten ist.

11. Laufstreifen eines Luftreifens, der aus einer Kautschukmischung besteht, die mindestens ein Dienpolymer und Ruß, an dessen Oberfläche Siliciumdioxid fixiert ist, enthält, **dadurch gekennzeichnet, dass** das Dienpolymer ein funktionalisiertes Dienpolymer, das am Kettenende eine Silanol-Gruppe oder einen Polysiloxanblock mit endständiger Silanol-Gruppe aufweist, oder ein Dienpolymer ist, das entlang der Kette mit Silanol-Gruppen modifiziert ist.
